# EUROPEAN PATENT APPLICATION

(11) **EP 4 675 331 A2**
(43) Date of publication of application: **07.01.2026**
(21) Application number: 25218549.1
(22) Date of filing: 27.11.2020
(51) Int. Cl.: G02B 21/30

(54) **AN IMMERSION SYSTEM FOR SUPPLYING IMMERSION LIQUID TO AN IMMERSION MICROSCOPE OBJECTIVE AND CORRESPONDING MICROSCOPE**

(62) Divisional of application: 20210438.6
(71) Applicant: Leica Microsystems CMS GmbH, 35578 Wetzlar (DE)
(72) Inventor: Christ, Stefan, 35578 Wetzlar (DE)
(74) Representative: Schaumburg und Partner Patentanwälte mbB

(57) **Abstract**

The present invention relates to an immersion system (100) for supplying an immersion liquid (112) to a front lens (122) of a microscope objective (120) of a microscope, the temperature of the immersion liquid (112) being controlled at a predetermined temperature, the system (100) comprising an immersion liquid supply line (110) configured for supplying immersion liquid (112) from an immersion liquid reservoir (740) to the front lens (122) of the microscope objective (120), a heating unit (114) integrated into the immersion liquid supply line (110), at least one temperature sensor (116, 316, 616) for detecting a temperature and for outputting a temperature signal corresponding to the detected temperature, the at least one temperature sensor (616) being configured to be arranged near the microscope objective (120) for contactless detection of a temperature corresponding to a temperature of the immersion liquid (112) supplied to the front lens (122) of the microscope objective (120) and/or the at least one temperature sensor (116, 316) being arranged at the heating unit (114) to detect a temperature corresponding to a temperature of the immersion liquid (112) supplied to the front lens (122) of the microscope objective (120), and a control unit (530) connected to the at least one temperature sensor (116, 316, 616) and to the heating unit (114) for controlling a power of the heating unit (114) depending on the temperature signal received from the at least one temperature sensor (116, 316, 616).

## Description

### Field

The present inventive concept relates generally to microscopic imaging of samples using an immersion microscope objective, more particularly, to an immersion system for supplying an immersion liquid to a front lens of a microscope objective of a microscope, and to a corresponding microscope.

### Background

For microscopic examination of living cells it is expedient to use an incubation system to provide an incubation atmosphere of a predetermined composition and/or of a predetermined temperature to the sample to be examined. The most relevant configurations of such incubation systems are stagetop incubators on the one hand, and cage incubators on the other hand. A stagetop incubator provides a small chamber including a microenvironment around most of the topside of the sample itself, whereas a cage incubator provides a more or less large cavity in which for example various other technical instruments can be integrated together with the sample under an incubation atmosphere. Commonly, a cage incubator encloses largely the microscope itself. It is, however, more advantageous to use a smaller sample chamber incubator proposed by the applicant, which only encloses, in case of an inverted microscope, the illumination unit and the upper half of the microscope stage including the sample. Other cage incubators also include the microscope objective and the objective revolver as well as the sample bottom side or microscope stage bottom side in the incubated volume. In addition, especially for use with a stagetop incubator, there are devices available for controlling the temperature of the microscope objective itself, for instance, by silicone pads with integrated heating foils, wrapped around the objective.

Advances in automation of microscopy led to the development of auto immersion objectives. These objectives are able to generate and control the immersion liquid supply. For example, immersion liquid is supplied from a reservoir to an immersion liquid cap at the front lens of the microscope objective. For immersion with water objectives, water is usually drained from a water reservoir with uncontrolled temperature, located somewhere inside or outside the microscope. Thus, the supply of fresh immersion liquid results in temperature variations negatively affecting the sample of living cells during examination.

US 7,623,289 B2 suggests an immersion system having an immersion liquid reservoir and a supply line for supplying immersion liquid from the reservoir to the front lens of the microscope objective, a heating unit being integrated into the supply line. Furthermore, another heater is mounted in an objective cap, the objective cap comprising a temperature sensor and an immersion liquid holding cap. A control unit regulates the temperature of the heating unit integrated into the supply line and that of the heater integrated into the objective cap according to the temperature information from this sensor. However, such a set up might not be ideal due to interferences, especially if additional sensor functionalities are to be integrated into an immersion liquid cap. Further, the integration of a heater into the immersion liquid cap and/or into the microscope objective itself is complex and prone to interferences with other cap sensors. Additionally, depending on the movement of the sample relative to the objective and on the necessary pump cycles, increasing amounts of immersion liquid must be injected and temperature controlled in the space between the sample and the objective. This increases the temperature control load.

In an inverted microscope configuration, for instance, the sample is located at the bottom of the sample container like wells of a microplate. In a high sophisticated set up for an incubation solution, the temperature around the sample and the objective tip must be kept within +/- 0.1° C tolerance or better at all times. With the existing temperature-controlled immersion solutions, such a highly demanding temperature control is not possible.

### Summary

The present inventive concept provides an improved immersion system for supplying an immersion liquid to a front lens of a microscope objective of a microscope, and a corresponding microscope according to the independent claims. Advantageous embodiments are the subject-matter of the respective dependent claims and of the following description.

In the present inventive concept, an immersion system for supplying an immersion liquid to a front lens of a microscope objective of a microscope is provided, the temperature of the immersion liquid being controlled at a predetermined temperature, the system comprising an immersion liquid supply line configured for supplying immersion liquid from an immersion liquid reservoir to the front lens of the microscope objective, a heating unit integrated into the immersion liquid supply line, and at least one temperature sensor for detecting a temperature and for outputting a temperature signal corresponding to the detected temperature. The at least one temperature sensor is configured to be arranged near the microscope objective for contactless detection of a temperature corresponding to a temperature of the immersion liquid supplied to the front lens of the microscope objective. In this embodiment, the (at least one) contactless temperature sensor is arranged next to the microscope objective near the front lens such that a temperature of an area around the objective tip can be detected. In this embodiment, no sensor has to be mounted in or at the objective or in or at the immersion liquid cap such that these areas can be kept free for other kinds of sensors if desired.

In an alternative or in an additional embodiment, the at least one temperature sensor is arranged at the heating unit itself to detect a temperature corresponding to a temperature of the immersion liquid supplied to the front lens of the microscope objective. The (at least one) heater integrated temperature sensor is arranged in or at the heating unit or, more preferred, in the immersion liquid conducted through the heating unit, the detected temperature being related to the temperature of the immersion liquid supplied to the front lens of the microscope objective. Also in this embodiment, no temperature sensor mounted in or at the microscope objective itself or in or at the immersion liquid cap is necessary. Thus, these areas can be kept free for other kinds of sensors if desired.

The immersion system of the present inventive concept further comprises a control unit connected to the at least one temperature sensor as discussed above and to the heating unit for controlling a power of the heating unit depending on the temperature signal received from the at least one temperature sensor. The temperature detected by the contactless temperature sensor and/or by the heater integrated temperature sensor corresponds to a specific temperature of the immersion liquid at the site of immersion, i.e. at the tip of the microscope objective. The system can thus be calibrated in pre-experiments to describe the correlation of the detected temperature and the temperature at the immersion site. Thus, it becomes possible to precisely regulate the immersion liquid temperature at the immersion site by using the temperature values detected by the contactless temperature sensor and/or by the heater integrated temperature sensor. For instance, a closed-loop control controls the power of the heating unit such that the temperature of the immersion liquid at the immersion site is kept at the desired constant temperature value.

The immersion system according to the present inventive concept only needs a heating unit integrated into the immersion liquid supply line such that no further heating unit, especially no heating unit mounted in or at the objective itself or in or at the immersion liquid cap is necessary. As a result, any temperature sensor and any heater mounted in or at the microscope objective/immersion liquid cap can be dispensed with. The corresponding regions can thus be equipped with other kinds of sensors and instruments.

In a preferred embodiment, the heating unit is in the form of a heatable sleeve encircling the immersion liquid supply line. In particular, tubular or spiral-formed heatable sleeves preferably made of silicone can be used. Such sleeves can be equipped with an integrated temperature sensor typically located between the sleeve and the immersion liquid supply line. In general, the temperature sensor is arranged in or at the sleeve for measuring a temperature corresponding to a temperature of the immersion liquid supplied to the front lens of the microscope objective, i.e. corresponding to a temperature at the immersion site.

In another preferred embodiment, the heating unit is a heatable hollow adapter piece connected in the supply line and configured to heat immersion liquid running through the adapter piece. Particularly, the adapter piece may be made of metal and is connected in between the supply line such that it forms a portion of the supply line. A heating element is integrated into the adapter piece or surrounding the adapter piece. It is preferred that the temperature sensor is arranged inside the hollow adapter piece such that the temperature sensor directly detects the temperature of the immersion liquid running through the adapter piece.

In another preferred embodiment, the system according to the present inventive concept comprises a reservoir heater configured for heating the immersion liquid reservoir. The reservoir typically has the form of a container or a bottle containing the immersion liquid. The reservoir heater can be located inside the reservoir for directly heating the immersion liquid and/or outside the reservoir, e.g. surrounding the reservoir for indirectly heating the immersion liquid inside the reservoir.

In this embodiment, it is preferred that the reservoir heater is connected to the control unit such that the control unit controls a power of the reservoir heater depending on the temperature signal of the temperature sensor, i.e. of the contactless temperature sensor and/or of the heater integrated temperature sensor. This additional heating system supports the integrated heating unit by pre-heating the immersion liquid supplied to the integrated heating unit before it is conducted to the objective tip. This measure reduces the load of the integrated heating unit.

In this embodiment, it is further preferred if the reservoir heater comprises an additional reservoir temperature sensor for detecting a temperature corresponding to a temperature of the immersion liquid reservoir, i.e. a temperature of the immersion liquid in the reservoir, and for outputting a temperature signal corresponding to the detected temperature. The reservoir temperature sensor of this embodiment is also connected to the control unit such that the control unit controls the power of the reservoir heater depending additionally on the reservoir temperature signal of the reservoir temperature sensor. Thus, the temperature signals of both the contactless/heater integrated temperature sensor and the additional reservoir temperature sensor are processed by the control unit to more effectively control the power of the reservoir heater such that the heating power of the reservoir heater and of the integrated heating unit better match to each other.

In another aspect of the present inventive concept, a microscope is suggested, the microscope comprising a microscope objective, more particularly an immersion microscope objective and the immersion system according to the first aspect of the present inventive concept.

All the features explained in connection with the immersion system of the present inventive concept equally apply to the microscope according to this aspect of the present inventive concept. Thus, reference is made to the explanations above.

In a preferred embodiment, the microscope comprises a microscope stage accommodating a sample carrier and/or a sample, and the immersion system according to the first aspect of the present inventive concept is used to supply immersion liquid between the front lens of the microscope objective and the sample carrier and/or the sample. Such a microscope can be used with high aperture, high magnification immersion objectives, especially for examining living cells.

Such a microscope preferably further comprises the immersion liquid reservoir as discussed above.

It should be noted that the above features of the embodiments according to the first and second aspect of the inventive concept can - wholly or in part - be combined to achieve other embodiments still falling under the scope of the present inventive concept as defined in the appended claims.

As used herein, the term "and/or" includes any and all combinations of one or more of the associated listed items and may be abbreviated as "/".

Although some aspects have been described in the context of the first aspect of the present inventive concept, it is clear that these aspects also represent a description of the second aspect of the present inventive concept, and vice versa.

Further embodiments and advantages of the present inventive concept are described below in connection with the following figures.

Short description of the figures
- Figure 1: schematically shows an embodiment of a part of an immersion system according to the present inventive concept including a microscope objective and a part of a microscope stage for microscopic imaging of a sample,
- Figure 2: schematically shows a cross section of the heating unit shown in Figure 1,
- Figure 3: schematically shows another embodiment of a part of an immersion system according to the present inventive concept including a microscope objective and a part of a microscope stage for microscopic imaging of a sample,
- Figure 4: schematically shows a cross section of the heating unit shown in Figure 3,
- Figure 5: schematically shows the embodiment of Figure 1 including a control unit,
- Figure 6: schematically shows a further embodiment of an immersion system according to the present inventive concept,
- Figure 7: schematically shows a further embodiment of an immersion system according to the present inventive concept,
- Figure 8: schematically shows the embodiment of Figure 7 including a control unit, and
- Figure 9: schematically shows an embodiment of a microscope according to the present inventive concept.

### Detailed description

In the following, the figures are described comprehensively, same reference signs designating same or at least structurally identical components.

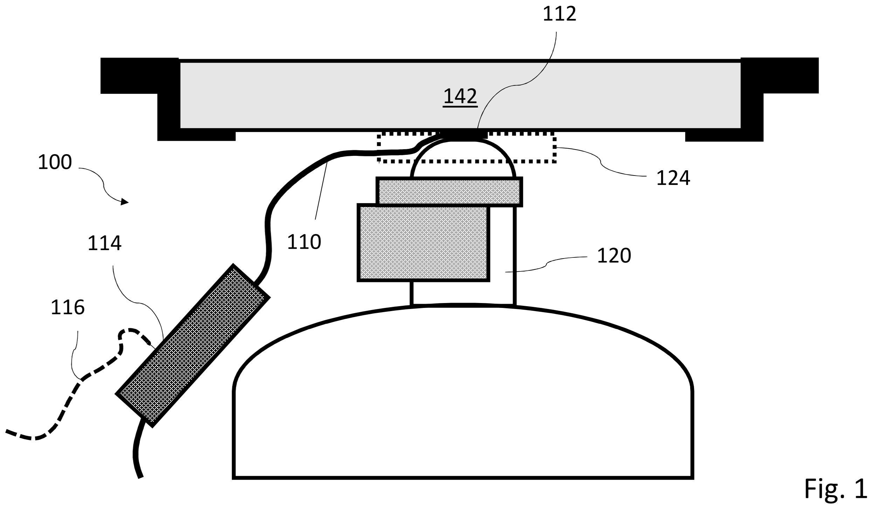

Figure 1 schematically shows an immersion microscope objective 120 of high magnification and high aperture including a motorized auto-correcting lens system. The front lens at the top of the microscope objective 120 is designated 122. At the microscope objective tip an immersion liquid cap 124 is arranged for holding back immersion liquid which is supplied between the front lens 122 and the bottom of the sample carrier 144 by means of the supply line 110. A sample 142 which is positioned in the sample carrier 144 can be imaged by a well-known inverted microscope including the immersion objective 120 as shown in Figure 1. The sample carrier 144 is typically inserted in a microscope stage insert or, more generally, in a microscope stage 140.

Figure 1 further shows a part of an immersion system according to the present inventive concept comprising a heating unit 114 integrated into the immersion liquid supply line 110 leading up to the immersion site at the objective tip. A temperature sensor 116 is arranged at the heating unit 114 to detect a temperature corresponding to the temperature of the immersion liquid supplied to the immersion site.

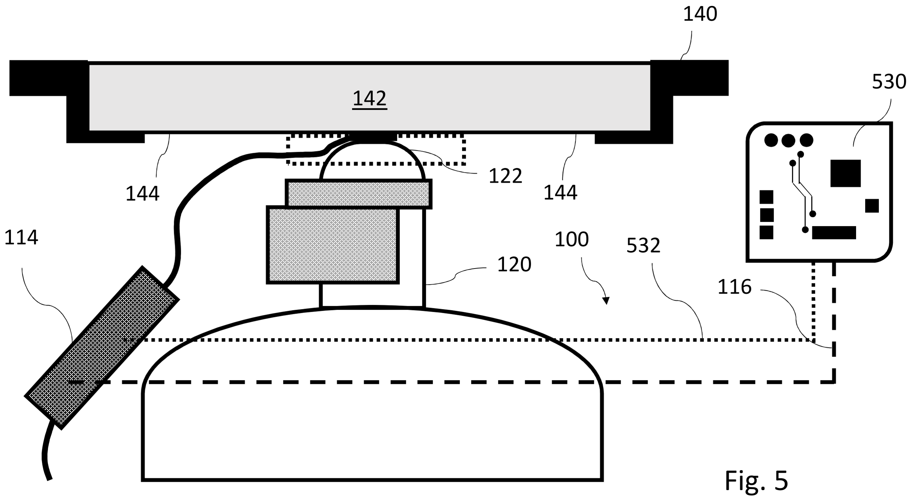

As can be seen from Figure 1, no heater and no temperature sensor is arranged in the region of the front lens 122 of the objective 120 or of the immersion liquid cap 124. This region can thus be kept free for other kinds of sensors and instruments as already explained above. More details regarding the temperature control will be discussed in connection with Figure 5 below.

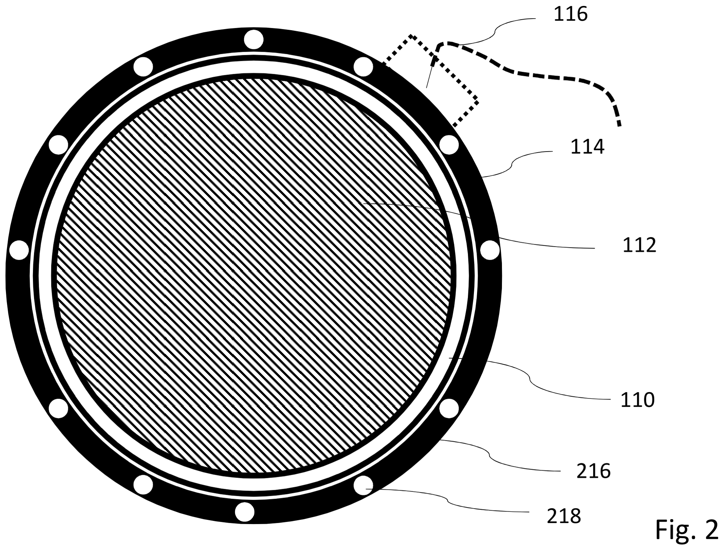

Preferably, the heating unit 114 is formed as a heatable sleeve encircling the immersion liquid supply line 110, a cross section of an embodiment of a heatable sleeve is shown in Figure 2.

Figure 2 schematically shows a cross section of a heating unit 114 in the form of a heatable sleeve and of an immersion liquid supply line 110. As can be seen from Figure 2, a sleeve pad 216 concentrically encircles the immersion liquid supply line 110. The sleeve pad 216 can be made of silicone. Heating wires 218 are embedded in the sleeve pad 216. A temperature sensor is arranged at the sleeve pad 216, here at the outside of the sleeve pad, but can also be arranged between the sleeve pad 216 and the outside of the supply line 110.

By providing power to the heating unit 114, an immersion liquid 112 conducted through the supply line 110 is heated by means of heat transfer from the heating wires 218 to the immersion liquid 112. The temperature detected by the temperature sensor 116 corresponds to the temperature of the immersion liquid 112 and thus to the temperature at the immersion site.

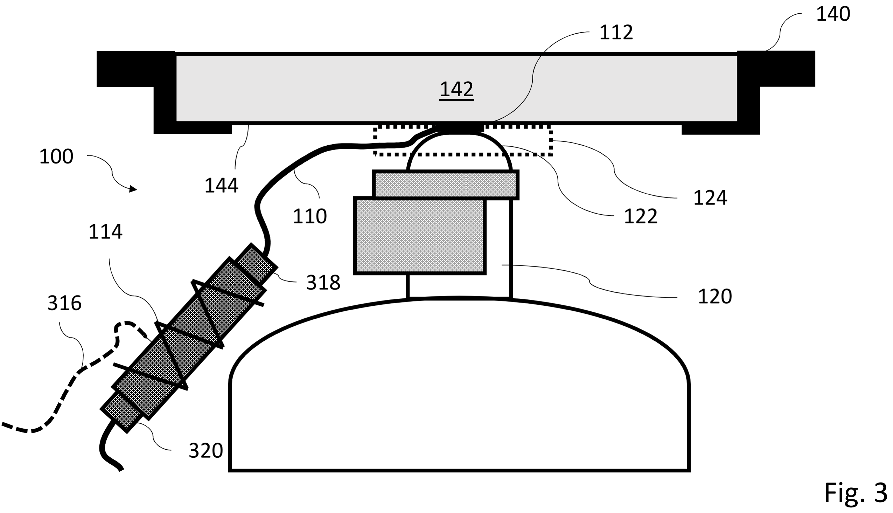

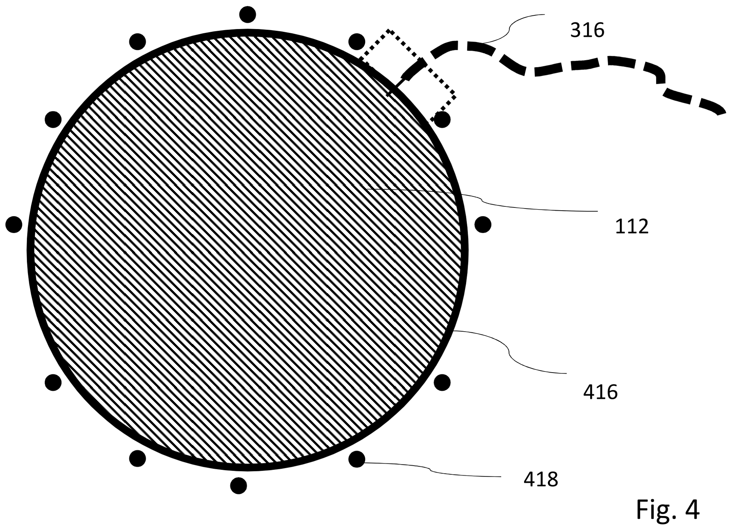

Figure 3 schematically shows another embodiment of a heating unit 114 in a configuration otherwise similar to that of Figure 1. Therefore, reference is made to Figure 1 concerning the microscope components except for the heating unit 114. In this embodiment, the heating unit 114 is a heatable hollow adapter piece which forms a part of the supply line 110. The adapter piece is connected to the supply line 110 at a first adapter connection 318 and a second adapter connection 320. A temperature sensor 316 is arranged at the heating unit 114 as will be shown in more detail in Figure 4.

Figure 4 schematically shows a cross section through the heating unit 114 of Figure 3. The heating unit 114 comprises a metal adapter tube 416 which is connected to the supply line 110 by adapter connections 318 and 320 (as shown in Figure 3). The metal adapter tube 416 is surrounded by heating wires 418. Immersion liquid 112 runs through the tube 416 when immersion liquid is supplied to the immersion site. A temperature sensor 316 is connected to the adapter tube 416 and, as can be seen from Figure 4, extends into the interior of the adapter tube 416 to detect the temperature of the immersion liquid 112 itself. Again, the temperature of the immersion liquid at this position corresponds to the temperature of the immersion liquid at the immersion site. As the metal adapter tube 416 has a high thermal conductivity, immersion liquid 112 inside the tube 416 can be effectively heated by the heating wires 418.

Figure 5 schematically shows the situation of Figure 1 including a control unit 530 for controlling the temperature of the immersion liquid at the immersion site, i.e. at the objective tip or, in other words, between the front lens 122 of the microscope objective 120 and the bottom of the sample carrier 144. As all components except for the control unit 530 of Figure 5 are discussed in connection with Figure 1, reference is made to Figure 1 in this respect. As can be seen from Figure 5, the control unit 530 is connected via a power control line 532 to the heating unit 114 to control a power of the heating unit 114, particularly the heating power of the heating wires 218 (see Figure 2). The resulting temperature is detected via temperature sensor 116 located at the heating unit 114 and connected to the control unit 530 for delivering a temperature signal to the control unit 530. The temperature detected by temperature sensor 116 corresponds, as already mentioned above, to the specific temperature of the immersion liquid at the site of immersion. After calibrating the system in pre-experiments, the correlation of the detected temperature and the temperature at the immersion site can be described. Using this correlation it is possible to precisely control the immersion liquid temperature at the immersion site at the objective tip by only using the temperature values detected by temperature sensor 116, particularly without using a temperature sensor in the region of the objective tip. In the embodiment shown in Figure 5, a closed-loop control regulates the power of the heating unit 114 via power control line 532 such that the temperature of the immersion liquid at the immersion site is kept constant at a predetermined temperature.

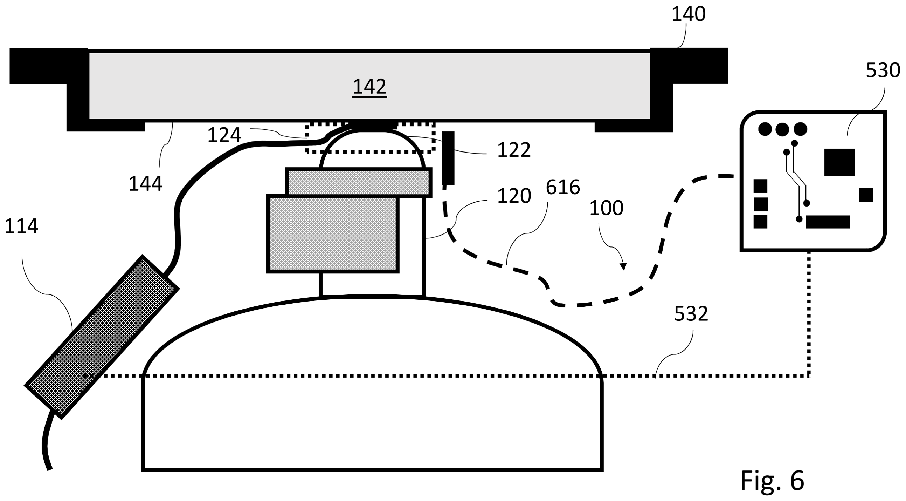

Figure 6 shows another embodiment of a configuration similar to the one shown in Figure 5, except for the temperature sensor used. Therefore, reference is made to Figure 5 in this respect. In the embodiment of Figure 6, a contactless temperature sensor 616 is used. The temperature sensor 616 is arranged near the front lens 122 of the microscope objective 120 for contactless detection of a temperature in the region of the front lens 122 and the immersion liquid cap 124. The temperature sensor 616 is connected to the control unit 530. Again, the control unit 530 is connected to the heating unit 114 by means of the power control line 532.

The contactless temperature sensor 616 detects a temperature which corresponds to a temperature of the immersion liquid at the immersion site. The corresponding correlation of these temperatures can be determined in pre-experiments. In the figures, the temperature sensors are designated 116, 316, 616; it is clear to a person skilled in the art that the actual sensor, depending on the kind of temperature sensor used, may be in the tip of the sensor, i.e. at one end of the line designated 116, 316 or 616.

Regarding the temperature control in the embodiment of Figure 6, reference is made to the explanations in connection with Figure 5.

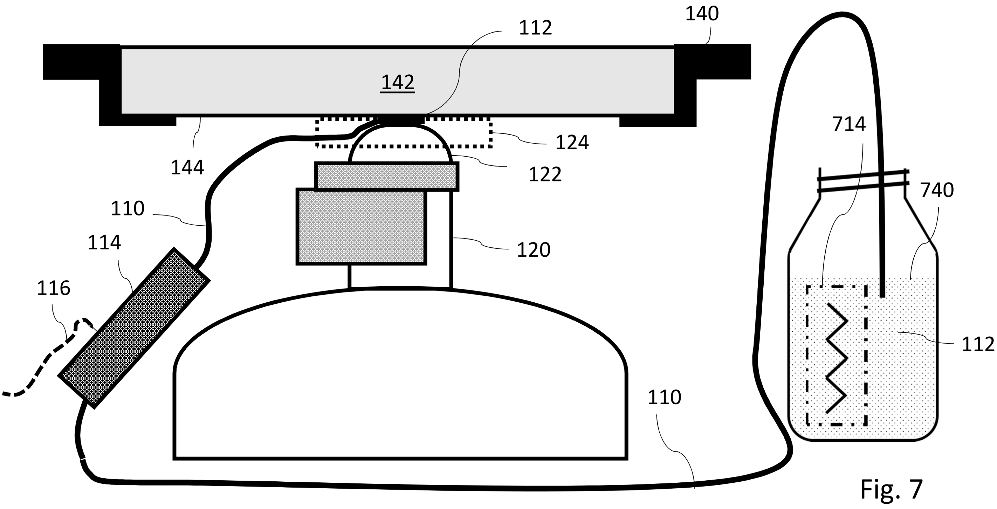

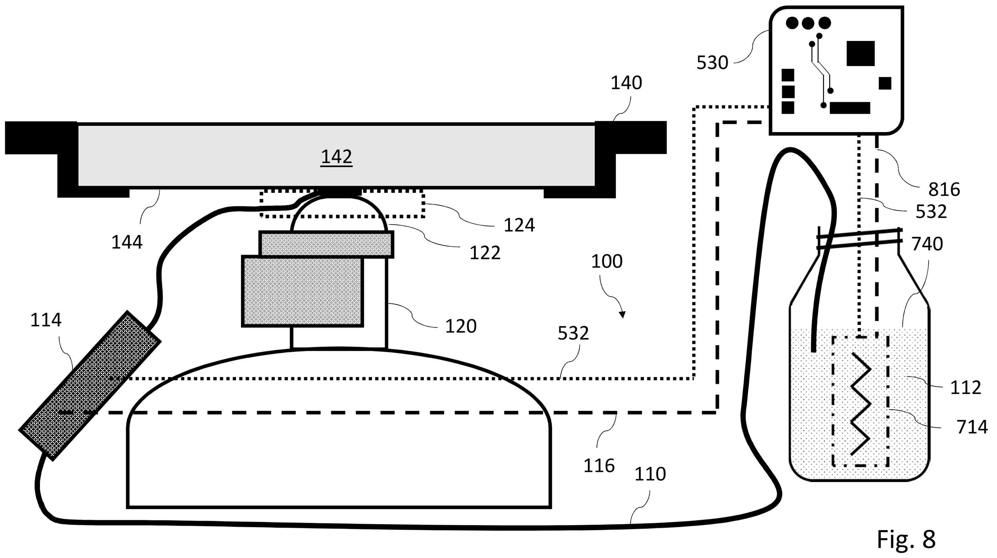

Figure 7 schematically shows another embodiment of an immersion system including an immersion liquid reservoir 740 containing immersion liquid 112. Immersion liquid 112 is pumped through supply line 110 to the heating unit 114. Inside the immersion liquid reservoir 740 a reservoir heater 714 is arranged for directly heating the immersion liquid 112 inside the reservoir 740. Heating by the reservoir heater 714 can be regarded a pre-heating in order to reduce the heating load of the heating unit 114. Concerning the remaining components shown in Figure 7, reference is made to Figure 1 which shows a similar configuration. More details of the configuration of Figure 7 are described in connection with Figure 8.

Figure 8 schematically shows another embodiment of an immersion system which largely corresponds to the one shown in Figure 5. Therefore, reference is made to the explanations above in connection with Figure 5. In the embodiment of Figure 8, however, the immersion liquid reservoir 740 and the reservoir heater 714 of Figure 7 are included. The reservoir heater 714 is connected via a power control line 532 to the control unit 530. Furthermore, a reservoir temperature sensor 816 is arranged at the reservoir heater 714 and/or inside the immersion liquid 112 within the reservoir 740 for detecting a temperature corresponding to a temperature of the immersion liquid inside the reservoir 740. The corresponding temperature signal is output and received by the control unit 530. On the other hand, as already explained in connection with Figure 5, the control unit receives a temperature signal from the temperature sensor 116 arranged at the heating unit 114, and the control unit 530 is connected to the heating unit 114 via another power control line 532.

In the embodiment shown in Figure 8, the control unit 530, in the first place, controls the power of the reservoir heater 714 depending on the temperature signal of the temperature sensor 116. Only in second place, control unit 530 controls the power of the reservoir heater 714 depending on the reservoir temperature signal of the reservoir temperature sensor 816. This makes possible a two-stage regulation of the temperature of the immersion liquid 112 supplied to the immersion liquid cap 124, or, more generally, to the immersion site. In a first step, the control unit 530 can determine a temperature difference between the temperature detected by temperature sensor 116 and the temperature detected by temperature sensor 816. By controlling the power of each of the reservoir heater 714 and the heating unit 114, the control unit 530 can achieve a reduction of the determined temperature difference. Following this coarse adjustment of the temperature, a fine adjustment of the temperature can be accomplished by the heating unit 114 itself, as already described in connection with Figure 5.

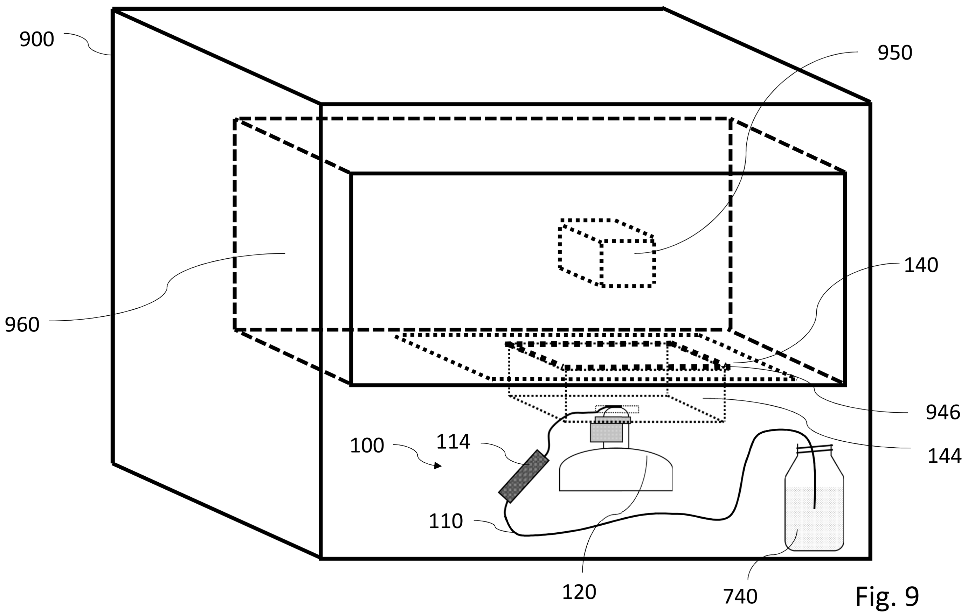

Figure 9 schematically shows an embodiment of a microscope 900 according to the present inventive concept. In this embodiment, microscope 900 is an inverted microscope comprising an incubated sample chamber 960 for incubating the sample chamber, i.e. the separated space including illumination optics 950 of the microscope 900 and the upper part of the microscope stage 140 and of the sample carrier 144 wherein a sample to be examined is positioned. Below the incubated sample chamber 960 imaging optics are installed comprising the microscope objective 120 as shown in Figure 9. Further microscope components necessary for microscopic imaging of a sample in the sample carrier 144 are not shown in Figure 9 and are as such known from the prior art.

The microscope 900 as shown in Figure 9 further comprises a system according to the present inventive concept as already explained in detail above. The system 100 may be the system as shown in Figure 8, only the essential components of such a system 100 are shown in Figure 9. The sample carrier 144 containing samples to be examined is inserted into a microscope stage insert 946 which is placed into the microscope stage 140 as shown in Figure 9. By relative movement of the microscope stage 140 in relation to the microscope objective 120, a sample of interest can be placed above the microscope objective tip. Immersion liquid 112 is supplied from the immersion liquid reservoir 740 through the supply line 110 to the heating unit 114 integrated in the supply line 110. The temperature of the immersion liquid 112 is controlled at a predetermined temperature value by any one of the different possibilities explained above in connection with Figures 1 to 8. Thus, the temperature of the immersion liquid 112 at the immersion site, here between the front lens 122 of the microscope objective 120 and the bottom of the sample carrier 144, can be kept within +/- 0.1° C tolerance at the desired predetermined temperature. This avoids any temperature induced harm to the sample like living cells examined in the microscope 900.

### List of reference signs

- 100: immersion system
- 110: supply line
- 112: immersion liquid
- 114: heating unit
- 116: temperature sensor
- 120: microscope objective
- 122: front lens
- 124: immersion liquid cap
- 140: microscope stage
- 142: sample
- 144: sample carrier

- 216: sleeve pad
- 218: heating wires

- 316: temperature sensor
- 318: adapter connection
- 320: adapter connection

- 416: metal adapter tube
- 418: heating wires

- 530: control unit
- 532: power control line

- 616: temperature sensor

- 740: immersion liquid reservoir

- 816: reservoir temperature sensor
- 900: microscope
- 946: microscope stage insert
- 950: illumination optics
- 960: incubated sample chamber

## Claims

1. An immersion system (100) for supplying an immersion liquid (112) to a front lens (122) of a microscope objective (120) of a microscope (900), the immersion system (100) comprising
an immersion liquid supply line (110) configured for supplying immersion liquid (112) from an immersion liquid reservoir (740) to the front lens (122) of the microscope objective (120),
a heating unit (114) integrated into the immersion liquid supply line (110),
at least one temperature sensor (116, 316) for detecting a temperature and for outputting a temperature signal corresponding to the detected temperature,
said at least one temperature sensor (116, 316) being arranged at the heating unit (114) to detect a temperature corresponding to a temperature of the immersion liquid (112) supplied to the front lens (122) of the microscope objective (120),
and a control unit (530) connected to the at least one temperature sensor (116, 316) and to the heating unit (114) and configured to control a power of the heating unit (114) depending on the temperature signal received from the at least one temperature sensor (116, 316), such that the temperature of the immersion liquid (112) corresponds to a predetermined temperature.

2. The immersion system of claim 1, wherein the heating unit (114) is in the form of a heatable sleeve encircling the immersion liquid supply line (110).

3. The immersion system of claim 2, wherein the temperature sensor (116) is arranged in or at the sleeve.

4. The immersion system of claim 1, wherein the heating unit (114) is a heatable hollow adapter piece connected in the supply line (110) and configured to heat immersion liquid (112) running through the adapter piece.

5. The immersion system of claim 4, wherein the temperature sensor (316) is arranged inside the hollow adapter piece.

6. The immersion system of any one of the preceding claims, comprising a reservoir heater (714) configured for heating the immersion liquid reservoir (740).

7. The immersion system of claim 6, wherein the reservoir heater (714) is connected to the control unit (530) such that the control unit (530) is configured to control a power of the reservoir heater (714) depending on the temperature signal of the temperature sensor (116, 316).

8. The immersion system of claim 7, wherein the reservoir heater (714) comprises a reservoir temperature sensor (816) for detecting a temperature corresponding to a temperature of the immersion liquid reservoir (740) and for outputting a temperature signal corresponding to the detected temperature, said reservoir temperature sensor (816) being connected to the control unit (530) such that the control unit (530) controls the power of the reservoir heater (714) depending additionally on the reservoir temperature signal of the reservoir temperature sensor (816).

9. A microscope (900) comprising a microscope objective (120) and the immersion system (100) according to any one of the preceding claims.

10. The microscope (900) of claim 9, further comprising a microscope stage (140) configured to accommodate a sample carrier (144) and/or a sample (142), wherein the immersion system (100) is configured to supply immersion liquid (112) between the front lens (122) of the microscope objective (120) and the sample carrier (144) and/or the sample (142).

11. The microscope (900) of claim 9 or 10, further comprising an immersion liquid reservoir (740).
